# EUROPEAN PATENT APPLICATION

(11) **EP 2 684 695 A1**
(43) Date of publication of application: **15.01.2014**
(21) Application number: 12305842.2
(22) Date of filing: 12.07.2012
(51) Int. Cl.: B32B 37/06, B30B 15/06

(54) **Device for laminating smart cards and associated lamination method**

(71) Applicant: Gemalto SA, 92190 Meudon (FR)
(72) Inventor: Amiot, Eric, 92190 Meudon (FR); Gourden, Yannick, 92190 Meudon (FR)

(57) **Abstract**

This invention relates to laminating device 100 for laminating smart cards, where the said smart cards are incorporated in a blank 1. Said device comprises a unit for depositing and pre-gluing 110 a protective layer 9 on at least one blank, a laminating unit 150 comprising means for pressing, heating and cooling 160 at least one blank, a unit 180 for cutting the blank 1 into a smart card with the standard marketing format 3. The pressing, heating and cooling means 160 comprise two supports 162a, 162b placed opposite each other and displaceable towards each other in order to apply pressure on the said blank 1. Each support 162a, 162b comprises at least one ceramic heating and cooling device 163a, 163b comprising a stack made up of a ceramic block 52 and a metal laminating plate 57.

## Description

This invention relates to a device for laminating smart cards and the associated lamination method. More particularly, it relates to a device for laminating and the associated lamination method in a card-by-card manufacturing process.

Conventionally, in mass smart card manufacturing processes, smart cards are produced identically in sheets and in large quantities in order to keep down production costs. However, that production mode is not suitable for manufacturing small quantities of smart cards, particularly limited runs, because with each change in the type of smart card, graphics or any other change, the manufacturing line as a whole needs to be reprogrammed, particularly as regards the graphical and electrical customisation of the cards.

In order to better adapt to the specificities and constraints of manufacturing smart cards in small runs, or even singly, special manufacturing lines have been developed. In these special manufacturing lines, production is carried out on a card-by-card basis and the different devices for collating the layers that form the cards, for the graphics and electrical customisation and also lamination are adapted to that production mode.

With this type of card-by-card manufacturing process, working with a blank in a special manufacturing format where the size is greater than the final standard card marketing format is also known.

From the point of view of the laminating device, the fact that the cards are manufactured using a card-by-card process leads to special constraints, and in general, the said device is made up of the following:
- a unit for depositing and pre-gluing a protective layer on the blank and possibly for positioning the magnetic strip and/or other films (hologram, signature panel etc.)
- a laminating unit comprising means for pressing, heating and cooling at least one blank, and
- a unit for cutting the blank to the standard smart card marketing format.

The pre-gluing unit may conventionally be made up of two heating rolls, between which the blanks are fed, thus applying a certain pressure and temperature increase to the blanks in order to pre-glue the layers to each other, followed by two cooling rolls between which the blanks are fed in order to lower their temperature. However, this type of laminating unit used for mass production is not very suitable for lamination while producing small runs, as it is not sufficiently flexible.

A known solution consists in using one or more laminating units made up of ceramic plate presses and comprising a device for heating and cooling the ceramic plates. However, the use of ceramic plates in contact with the blanks is not optimal, as that material is not suitable for withstanding the pressure applied during lamination.

One of the aims of this invention is thus to resolve, at least partially, the drawbacks of the prior art and to offer an improved laminating device that is suitable for production in small runs.

Thus, this invention relates to a device for laminating smart cards, the said smart cards being incorporated into a blank in a special manufacturing format with dimensions greater than those of the final smart card, where the said device comprises:
- a unit for depositing and pre-gluing a protective layer on at least one blank,
- a laminating unit comprising means for pressing, heating and cooling at least one blank,
- a unit for cutting the blank to the standard smart card marketing format,
the pressing, heating and cooling means of the laminating unit comprise two supports placed opposite each other and displaceable towards each other in order to apply pressure on the said blank, where each support comprises at least one ceramic heating and cooling device comprising a stack made up of a ceramic block and a metal laminating plate that is designed to be in contact with the blank to laminate.

According to one aspect of the invention, an elastic pressure pad is also placed between the ceramic block and the metal laminating plate.

According to another aspect of the invention, the ceramic heating and cooling device comprises a metal housing that is fixed to the support upon which the pressure pad and the laminating plate are fixed with a certain degree of play.

According to another aspect of the invention, the laminating plate comprises rough peripheral edges and a polished central surface, and the said polished central surface at least totally covers an area equivalent to that of a card in the standard marketing format on the blank.

According to another aspect of the invention, the laminating unit comprises at least one mobile carriage that is designed to feed and bring the at least one blank up to the pressing, heating and cooling means, the said carriage comprising at least one receiving orifice demarcated by edges on which the at least one blank rests.

According to another aspect of the invention, the ceramic heating and cooling device placed above the blank comprises retractable and elastic retaining pins, for example ejectors or 'centrers' mounted on springs

According to another aspect of the invention, the receiving orifice comprises centring holes on the periphery, the said centring holes being designed to receive the ends of the retaining pins and the said ends being conical in shape.

According to another aspect of the invention, the pressing, heating and cooling means of the laminating unit can laminate at least two blanks simultaneously.

According to another aspect of the invention, the pressing, heating and cooling means comprise a single support for each side of the blanks to laminate simultaneously.

According to another aspect of the invention, the pressing, heating and cooling means comprise, for each side of the blanks to laminate, as many supports as there are blanks, where the said supports are individually mobile.

According to another aspect of the invention, the laminating unit comprises two loading carriages that alternately move to and from the pressing, heating and cooling means.

This invention also relates to a card lamination method, where the said cards are incorporated in a blank with a special manufacturing format, where the said method comprises:
- a first stage where a protective layer is deposited and pre-glued on a blank, by a depositing and pre-gluing unit,
- a second lamination stage with pressing, heating and cooling means of at least one blank by a laminating unit, where the said second lamination stage comprises the following sub-stages:
   - placing at least one blank in the pressing, heating and cooling means comprising: two supports placed opposite each other and displaceable towards each other in order to apply pressure on the said blank, where each support comprises at least one ceramic heating and cooling device comprising a stack made up of a ceramic block and a metal laminating plate that is designed to be in contact with the blank to laminate,
   - application of a lamination cycle to the at least one blank, comprising at least the following operations:
      ■ pressing the at least one blank between the laminating plates of the ceramic heating and cooling device by bringing the supports closer to each other,
      ■ heating the laminating plates,
      ■ cooling the laminating plates,
      ■ releasing the pressure applied on the at least one blank by moving the supports away from each other,
   - removing the at least one blank from the pressing, heating and cooling means, and
- a third stage where the laminated blank is cut into a card in standard marketing format by a cutting unit.

According to another aspect of the method in the invention, the sub-stage where the at least one blank is placed in pressing, heating and cooling means comprises the following intermediate stages:
- loading a blank in at least one receiving orifice, the said receiving orifice being carried by a first mobile carriage,
- moving the said first carriage into the pressing, heating and cooling means,
   and the sub-stage of removing the at least one blank comprises the following intermediate stages:
- moving the said first carriage out of the pressing, heating and cooling means,
- unloading the blank or blanks from the receiving orifice or orifices of the said first carriage.

According to another aspect of the invention, simultaneously with the sub-stage of the application of a lamination cycle to the at least one blank of the first carriage, the lamination method comprises the following stages:
- unloading the blank or blanks from the receiving orifice or orifices of a second carriage if it has any,
- placing a blank in at least one receiving orifice of the second carriage,
   and, simultaneously with the loading and unloading stages of the first carriage, the said lamination method comprises the following stages:
- moving the said second carriage to the pressing, heating and cooling means,
- application of a lamination cycle to the at least one blank placed in the second carriage,
- moving the said second carriage out of the pressing, heating and cooling means.

According to another aspect of the method in the invention, the first carriage comprises at least two receiving orifices.

According to another aspect of the method in the invention, the second carriage comprises at least two receiving orifices.

Other characteristics and benefits of the invention will become clearer in the description below, provided as an illustrative and non-limitative example, and the attached drawings, where:
- figure 1 is a schematic representation of a blank in a special manufacturing format used during the lamination method,
- figure 2 is a schematic representation of a top view of a laminating device according to the invention,
- figures 3a and 3b are schematic representations of top and side views of the action carried out by a depositing and pre-gluing unit,
- figure 4 is a schematic representation of a side sectional view of a laminating unit,
- figure 5 is a schematic sectional representation of pressing, heating and cooling means,
- figure 6 is a schematic perspective representation of a portion of the loading carriage according to the invention,
- figure 7 is a schematic perspective representation of a laminating plate according to the invention,

In the different figures, identical elements bear the same reference numbers.

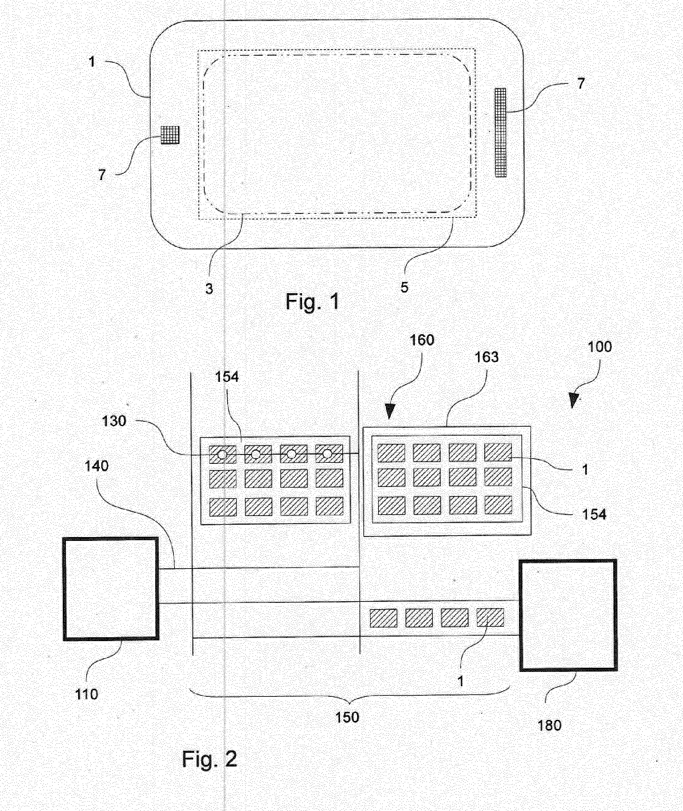

Figure 1 is a schematic representation of a blank 1 in a special manufacturing format that is conventionally used in processes for manufacturing in small runs and on a card-by-card basis

The blank 1 is product of the different stages of a manufacturing process, from which the final smart card will be cut out. The blank 1 thus comprises all the layers that make up the final smart card and is larger than the standard marketing format 3 of the final smart card. The blank 1 also has printing 5, covering the standard marketing format 3 of the final smart card, applied during a subsequent graphics customisation stage.

The standard marketing format 3 may vary depending on the type of final smart card to be produced. Thus, it might be a credit card format (1FF) a SIM card format (2FF) a micro SIM card format (3FF) or any other type of special format that may be requested by a customer.

To facilitate identification during the manufacturing process, the blank 1 may also comprise identification information 7, outside the standard marketing format 3. The identification information 7 may be a printed code allowing optical character recognition (OCR), for example in order to indicate the type of printing 5 on the blank 1 or a 2D barcode of the Datamatrix type allowing the identification of the final smart card itself.

Figure 2 is a schematic representation of the top view of a laminating device 100. The laminating device 100 comprises:
- a unit 110 for depositing and pre-gluing a protective layer on the blank 1,
- a laminating unit 150 comprising means for pressing, heating and cooling 160 at least one blank 1, and
- a unit 180 for cutting the blank 1 to the standard marketing format 3.

In order to move from one unit to another during the lamination process, the blanks 1 may be placed on transfer conveyors 130 or conveyors 140.

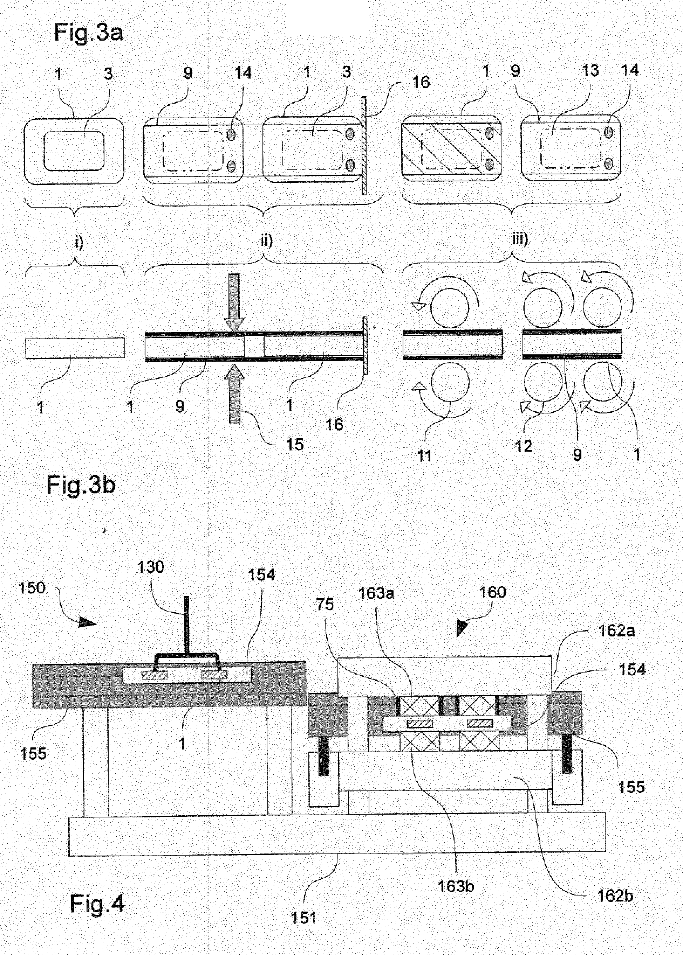

Figures 3a and 3b show more precisely the action and stages carried out by the depositing and pre-gluing unit 110. The blanks 1 are brought to the depositing and pre-gluing unit 110, for example by being placed in a loader.

Classically, during a first stage i), a blank 1 is removed from the loader and placed on the conveyor.

During a second stage ii), a protective layer 9 is deposited on at least one of the sides of the blank 1, so as to cover the area equal to the standard marketing format 3 of the final smart card. The protective layer 9 is, in a manner known to the person of the art, an adhesive layer of transparent plastic, and the adhesive may particularly be a heat-activable adhesive.

In a third and final stage iii), the blank 1 covered with the protective layer 9 is pre-laminated in order to activate the adhesives of the said protective layer 9 and thus make it adhere to the blank 1. Pre-lamination may advantageously be carried out by passing the blank 1 covered with the protective layer 9 between two heating rolls 11 and two cooling rolls 12.

In a particular embodiment of the depositing and pre-gluing unit 110, during a second stage ii), the protective layer 9 may be supplied in the form of a roll. That roll is then unrolled in part in order to cover the first blank 1 and is temporarily fixed to the blank 1 by means of a weld point 14, preferably two, and for example using an ultrasound welding device 15. The first blank 1 is then moved forward by the conveyor, thus unrolling the roll of the protective layer 9, and thus the unrolled protective layer 9 covers a second blank 1. Before transfer to the third stage iii) the protective layer 9 is cut to the format of the said blank 1, for example with cutters 16.

Figure 4 is a schematic representation of the side view of a laminating unit 150. The laminating unit 150 particularly comprises pressing, heating and cooling means 160 fixed to a frame 151; the blank 1 is placed in the pressing, heating and cooling means in order to be laminated.

To that end, the pressing, heating and cooling means 160 comprise two supports 162a and 162b between which at the at least one blank 1 is positioned. The supports 162a and 162b are placed opposite each other and can be displaced in order to apply pressure on the at least one blank 1. These displacement movements may, for example, be induced by cylinders or worms, and make it possible to control the pressure applied on the blank 1.

The pressing, heating and cooling means 160 also comprise at least one ceramic heating and cooling device 163a and 163b on each support 162a and 162b.

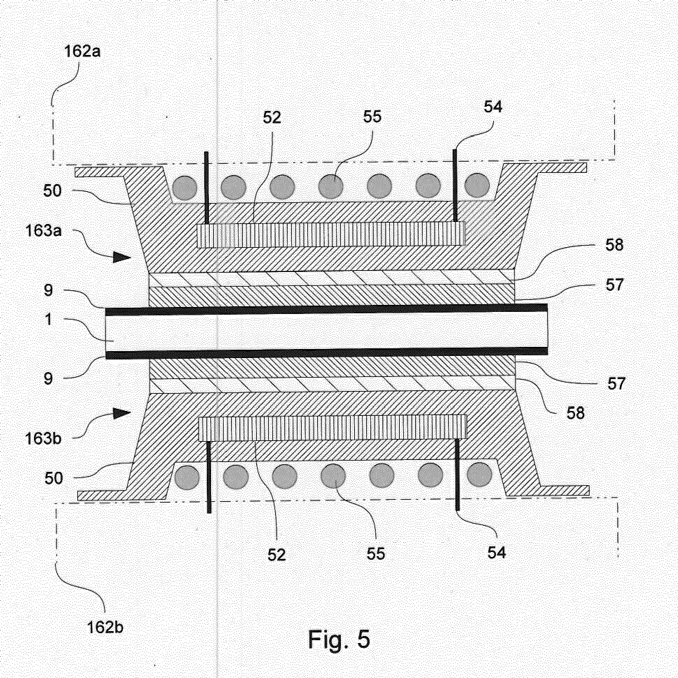

Figure 5 shows greater details of the ceramic heating and cooling devices 163a and 163b between which a blank 1 is placed. The said devices comprise a metal casing 50 fixed to the support 162a or 162b to which it is connected, for example by means of a screw, and forming a cavity 51. Inside the cavity 51 is placed a ceramic block 52 in which a heating device 53 is installed; that may be an electrical resistance heater powered by connections 54. A first side of the ceramic block 52 is in contact with the bottom of the cavity 51 of the metal housing 50 and its other side is in contact with a cooling circuit 55, for example a refrigerated water circuit.

The ceramic heating and cooling device 163a or 163b may also comprise a temperature sensor (not shown) of the thermocouple type connected to the bottom of the cavity 51 in order to measure the temperature of the metal housing 50 and thus control the lamination temperature.

Outside the cavity 51, vertically in relation with the ceramic bloc 52, a metal laminating plate 57 is fixed to the metal housing 50; the plate is designed to come in contact with a blank 1 to laminate. The metal laminating plate 57, for example made of 0.8-mm thick tempered stainless steel, transmits to the blank 1 the pressure applied by the movement of the support 162a or 162b and the heat diffused by the ceramic block 52 to heat the blank 1 during lamination. The metal laminating plate 57 also makes it possible to cool the blank 1 at the end of lamination, thanks to the cooling circuit 55 during the lamination process.

Between the metal support piece 50 and the metal laminating plate 57, an elastic pressure pad 58 may be inserted, for example a pad that is 0.45-mm thick, made of silicone material charged with heat conductors. That elastic pressure pad 58 makes it possible to cushion the contact between the metal laminating plate 57 and the blank 1, and even out the pressure and thus improve lamination.

Advantageously, the metal laminating plate 57 and possibly the elastic pressure pad 58 are fixed to the metal housing 50 with some play. That loose fastening of the metal laminating plate 57 and the elastic pressure pad 58 makes it possible to reduce the mechanical tension when the metal laminating plate 57 is put in contact with the blank 1 and when pressure is applied.

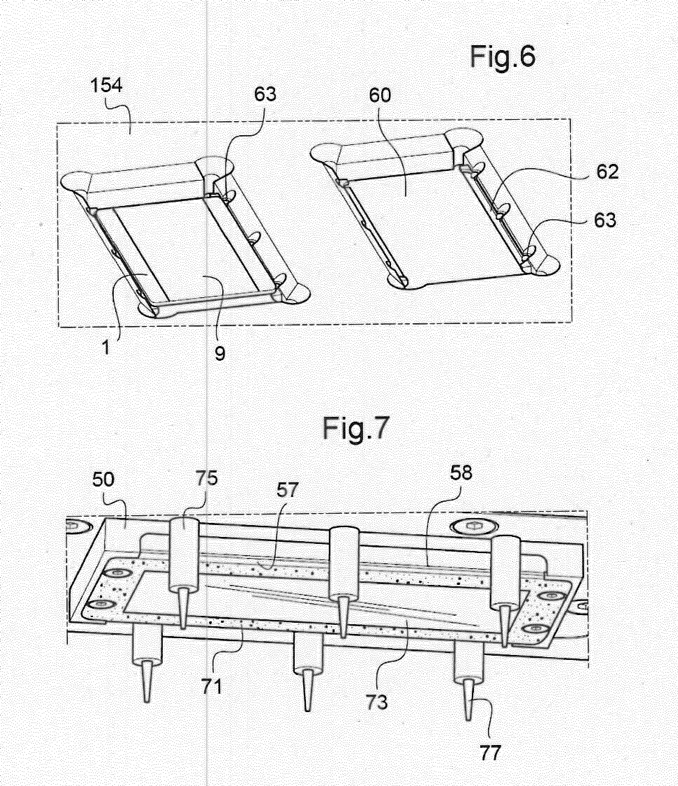

The side of the metal laminating plate 57 in contact with the blank 1 may comprise rough peripheral edges 71 and a polished central surface 73 as shown in figure 7. The polished central surface 73 is larger than the standard marketing format 3 and covers at least an area equivalent to the standard marketing format 3 on the blank 1 during lamination. The rough peripheral edges 71 may be made by sanding and the polished central surface 73 may have anti-adhesive coating. That arrangement of the metal laminating plate 57 makes it possible to contain material creep during lamination.

As shown in figure 4, the laminating unit 150 also comprises conveyors 155 and at least one carriage 154 on which the at least one blank 1 is positioned. The at least one carriage 154 is designed to bring the at least one blank 1 to the pressing, heating and cooling means 160. The at least one carriage 154 may be loaded using a transfer conveyor 130 that collects the said at least one blank 1 at the exit from the collating and pre-gluing unit 110.

Figure 6 shows greater details of the positioning of the at least one blank 1 on a loading carriage 154 used to carry and feed at least one blank to the pressing, heating and cooling means 160. The at least one blank 1 is positioned in a receiving orifice 60 demarcated by edges 62 on which a blank 1 rests by gravity. Only the periphery of the blank 1 is in contact with the edges 62 so that ceramic heating and cooling devices 163 can come in contact with the two sides of the blank 1, one below the receiving orifice 60 and the other above it.

As shown in figures 4 and 7, the ceramic heating and cooling device 163a placed above the blank 1 comprises retractable elastic retaining pins 75 designed to retain the blank 1 in the receiving orifice 60 when the supports 162a move away from the carriage 154 at the end of the lamination process. Further, the cylindrical base of the retaining pins 75 makes it possible to separate the card from the heating/cooling part when the press is opened and the conical part makes it possible to centre the card in the cavity.

The ends 77 of the retaining pins 75 may be conical as shown in figure 7 and the said ends 77 are inserted in the centring holes 63 over the periphery of the receiving orifice 60. Thus, when the ceramic heating and cooling device 163a is positioned above the receiving orifice 60, these conical ends 77 make it possible to centre the blank 1 in its receiving orifice 60.

Figures 2 and 4 show embodiments where the laminating unit 150 comprises two carriages 154 that alternately move to and from the pressing, heating and cooling means 160. When a first loading carriage is at the pressing, heating and cooling means 160 for laminating the at least one blank 1, the at least one laminated blank 1 is removed from a second carriage 154, and a new blank 1 to laminate is loaded. That alternating method makes it possible to work simultaneously during lamination, and thus achieve a faster speed.

Also in order to improve the speed, the carriage or carriages 154 may comprise several receiving orifices 60 to receive several blanks 1, i.e. at least two blanks 1. As a result, the pressing, heating and cooling means 160 can handle several blanks 1 simultaneously, for example twelve as shown in figure 2. To that end, the pressing, heating and cooling means 160 also comprise as many ceramic heating and cooling devices 163a and 163b on each support 162a and 162b as there are blanks 1 to laminate.

The pressing, heating and cooling means 160 may comprise a single support 162a and 162b for each side of the blanks 1 to laminate, and thus the pressure applied to the blanks 1 is common to all the blanks 1. In this embodiment, when all the receiving orifices 60 of a carriage 154 are not loaded with a blank 1, it is possible to load the empty receiving orifices 60 with shims that allow uniform pressure when the supports 162a and 162b come closer to each other.

In an alternative embodiment, the pressing, heating and cooling means 160 may comprise, for each side of the blanks 1 to laminate, as many supports 162a and 162b as there are blanks 1. In this particular embodiment, the supports 162a and 162b are mobile independently of each other, thus making it possible to control the laminating pressure individually for each blank 1.

This invention also relates to a smart card lamination method, where the said smart cards are incorporated in a blank 1 with a special manufacturing format, where the said device comprises:
- a first stage where a protective layer 9 is deposited and pre-glued on a blank 1 as described above by a depositing and pre-gluing unit 110.
- a second lamination stage with pressing, heating and cooling means 160 of at least one blank 1 by a laminating unit 150 comprising the following sub-stages:
   - placing at least one blank 1 in the pressing, heating and cooling means 160. This placing sub-stage can comprise the following stages:
      ○ loading a blank 1 in at least one receiving orifice 60, the said receiving orifice 60 being carried by a first mobile carriage 154,
      ○ moving the said first carriage into the pressing, heating and cooling means 160,
   - application of a lamination cycle to the at least one blank 1, the said lamination cycle comprising at least the following operations:
      ■ pressing the at least one blank 1 between the laminating plates 57 of the ceramic heating and cooling device 163 by bringing the supports 162a and 162b closer to each other,
      ■ heating the laminating plates 57,
      ■ cooling the laminating plates 57,
      ■ releasing the pressure applied on the at least one blank 1 by moving the supports 162a and 162b away from each other,
   - removing the at least one blank 1 from the pressing, heating and cooling means 160. This removal sub-stage can comprise the following stages:
      ○ moving the said first carriage 154 out of the pressing, heating and cooling means 160,
      ○ unloading the blank or blanks 1 from the receiving orifice or orifices 60 of the said first carriage 154.
- a third stage where the laminated blank 1 is cut into a card in the standard marketing format by a cutting unit 180.

When the laminating device 100 and particularly the laminating unit 150 comprises two carriages 154, simultaneously with the sub-stage of the application of a lamination cycle to the at least one blank 1 of the first carriage 154, the said lamination method comprises the following stages in order to make the two carriages 154 work simultaneously:
- unloading the blank or blanks 1 from the receiving orifice or orifices 60 of the said second carriage 154 if it has any,
- placing a blank 1 in at least one receiving orifice 60 of the second carriage 154.

Also for the same purpose, simultaneously with the loading and unloading stages of the first carriage 154, the said lamination method comprises the following stages:
- moving the second carriage 154 into the pressing, heating and cooling means 160,
- application of a lamination cycle to the at least one blank 1 carried by the second carriage 154,
- moving the second carriage 154 out of the pressing, heating and cooling means 160.

Thus, when the carriage 154 is in the pressing, heating and cooling means 160, the blank 1 is unloaded from and loaded into the other carriage 154, which makes it possible to work during the time required for the lamination cycle and thus increase the lamination speed of the device as a whole.

A complete cycle, from the loading of the blank 1 in a receiving orifice 60 up to its unloading after it has undergone a lamination cycle, may for example be carried out in some thirty seconds, and particularly in 32 seconds. Thus, the lamination speed can reach 1075 blanks 1 laminated per hour when the carriages 154 comprise twelve receiving orifices 60.

In one particular embodiment of the cutting unit 180, during the third stage when the laminated blank 1 is cut into a smart card with the standard marketing format 3, it is advantageous to copy the identification information 7 present on the blank 1 to a storage device present on the card in the standard marketing format 3. That storage device may for example be a magnetic strip or an electronic chip. That thus makes it possible to obtain a smart card in the standard marketing format 3 without marking the identification information 7, which is of particular interest, particularly with so-called prestige or premium smart cards.

It can be seen that the laminating device 100 and the lamination method relating to that device make it possible to laminate and manufacture smart cards in small runs at a high speed, requiring no or few operator interventions to adjust the different units on the basis of temperature and pressure parameters, which can be variable depending on the different runs of the smart cards to laminate.

## Claims

1. A laminating device (100) for laminating smart cards, the said smart cards being incorporated into a blank (1) in a special manufacturing format with dimensions greater than those of the final smart card, where the said device comprises:
- a unit for depositing and pre-gluing (110) a protective layer on at least one blank,
- a laminating unit (150) comprising means for pressing, heating and cooling (160) at least one blank,
- a unit (180) for cutting the blank (1) into a smart card with the standard marketing format (3),
**characterised in that** the pressing, heating and cooling means (160) of the laminating unit (150) comprises two supports (162a, 162b) placed opposite each other and displaceable towards each other in order to apply pressure on the said blank (1), where each support (162a, 162b) comprises at least one ceramic heating and cooling device (163a, 163b) comprising a stack made up of a ceramic block (52) and a metal laminating plate (57) that is designed to be in contact with the blank (1) to laminate.

2. A laminating device (100) according to the previous claim, **characterised in that** an elastic pressure pad (58) is also placed between the ceramic block (52) and the metal laminating plate (57).

3. A laminating device (100) according to the previous claim, **characterised in that** the ceramic heating and cooling device (163a, 163b) comprises a metal housing (50) fixed to the support (162a, 162b) to which the pressure pad (58) and the laminating plate (57) are fixed with some play.

4. A laminating device (100) according to claim 1, **characterised in that** the laminating plate (57) comprises rough peripheral edges (71) and a polished central surface (73), where the said polished central surface (73) at least totally covers an area equivalent to that of the card in the standard marketing format (3) on the blank (1).

5. A laminating device (100) according to claim 1, **characterised in that** the laminating unit (150) comprises at least one mobile carriage (154) that is designed to feed and bring the at least one blank (1) up to the pressing, heating and cooling means (160), the said carriage (154) comprising at least one receiving orifice (60) demarcated by edges (62) on which the at least one blank (1) rests.

6. A laminating device (100) according to the previous claim, **characterised in that** the ceramic heating and cooling device (160) placed above the blank (1) comprises retractable and elastic retaining pins (75).

7. A laminating device (100) according to the previous claim, **characterised in that** the receiving orifice (60) comprises centring holes (63) on the periphery, the said centring holes (63) being designed to receive the ends (77) of the retaining pins (75) and the said ends (77) are conical in shape.

8. A laminating device (100) according to claim 1, **characterised in that** the pressing, heating and cooling means (160) of the laminating unit (150) can laminate at least two blanks (1) simultaneously.

9. A laminating device (100) according to claim 8, **characterised in that** the pressing, heating and cooling means (160) comprise a single support (162a, 162b) for each side of the blanks (1) to laminate simultaneously.

10. A laminating device (100) according to claim 8, **characterised in that** the pressing, heating and cooling means (160) comprise, for each side of the blanks (1) to laminate, as many supports (162a, 162b) as there are blanks (1), where the said supports (162a, 162b) are individually mobile.

11. A laminating device (100) according to claim 5, **characterised in that** the laminating unit (150) comprises two carriages (154) that alternately move to and from the pressing, heating and cooling means (160).

12. A card lamination method, where the said cards are incorporated in a blank (1) with a special manufacturing format, where the said method comprises:
- a first stage where a protective layer is deposited and pre-glued on a blank, by a depositing and pre-gluing unit (110),
- a second lamination stage with pressing, heating and cooling means (160) of at least one blank (1) by a laminating unit (150), where the said second lamination stage comprises the following sub-stages:
• placing at least one blank (1) in the pressing, heating and cooling means (160) comprising: two supports (162a, 162b) placed opposite each other and displaceable towards each other in order to apply pressure on the said blank (1), where each support (162a, 162b) comprises at least one ceramic heating and cooling device (163a, 163b) comprising a stack made up of a ceramic block (52) and a metal laminating plate (57) that is designed to be in contact with the blank (1) to laminate,
• application of a lamination cycle to the at least one blank (1), comprising at least the following operations:
■ pressing the at least one blank (1) between the laminating plates (57) of the ceramic heating and cooling device (163) by bringing the supports (162a, 162b) closer to each other,
■ heating the laminating plates (57),
■ cooling the laminating plates (57),
■ releasing the pressure applied on the at least one blank (1) by moving the supports (162a, 162b) away from each other,
• removing the at least one blank (1) from the pressing, heating and cooling means (160), and
- a third stage where the laminated blank (1) is cut into a card in standard marketing format (3) by a cutting unit (180).

13. A lamination method according to the previous claim, **characterised in that** the sub-stage where the at least one blank (1) is placed in pressing, heating and cooling means (160) comprises the following intermediate stages:
- loading a blank (1) in at least one receiving orifice (60), the said receiving orifice (60) being carried by a first mobile carriage (154),
- moving the said first carriage (154) into the pressing, heating and cooling means (160),
and the sub-stage of the removal of the at least one blank (1) comprises the following intermediate stages:
- moving the said first carriage (154) out of the pressing, heating and cooling means (160),
- unloading the blank or blanks (1) from the receiving orifice or orifices (60) of the said first carriage (154).

14. A lamination method according to the previous claim, **characterised in that**, simultaneously with the sub-stage of the application of a lamination cycle to the at least one blank (1) of the first carriage (154), the lamination method comprises the following stages:
- unloading the blank or blanks (1) from the receiving orifice or orifices (60) of a second carriage (154) if it has any,
- placing a blank (1) in at least one receiving orifice (60) of the second carriage (154).
and, simultaneously with the loading and unloading stages of the first carriage (154), the said lamination method comprises the following stages:
- moving the said second carriage (154) to the pressing, heating and cooling means (160),
- application of a lamination cycle to the at least one blank (1) carried by the second carriage (154),
- moving the said second carriage (154) out of the pressing, heating and cooling means (160).

15. A lamination method according to claim 13, **characterised in that** the first carriage (154) comprises at least two receiving orifices (60).

16. A lamination method according to claim 14, **characterised in that** the second carriage (154) comprises at least two receiving orifices (60).
